# EUROPEAN PATENT SPECIFICATION

(11) **EP 2 204 945 B1**
(45) Date of publication and mention of the grant of the patent: **01.10.2014**
(21) Application number: 08851690.1
(22) Date of filing: 14.11.2008
(51) Int. Cl.: H04L 12/18, H04L 29/06

(54) **METHOD, DEVICE AND SYSTEM OF CREATING CONFERENCE AND CONFERENCE OPERATING**
VERFAHREN, VORRICHTUNG UND SYSTEM ZUR KONFERENZERSTELLUNG UND KONFERENZDURCHFÜHRUNG
PROCÉDÉ, DISPOSITIF ET SYSTÈME DE CRÉATION DE CONFÉRENCE ET DE FONCTIONNEMENT DE CONFÉRENCE

(30) Priority: 19.11.2007 CN 200710188352
(43) Date of publication of application: 07.07.2010
(73) Proprietor: Huawei Technologies Co., Ltd., Longgang District, Shenzhen Guangdong 518129 (CN)
(72) Inventor: GAO, Liping, Guangdong 518129 (CN); WANG, Hongxing, Guangdong 518129 (CN); WANG, Yong, Guangdong 518129 (CN)
(74) Representative: Thun, Clemens
(86) International application number: PCT/CN2008/073055
(87) International publication number: WO 2009/065344

(56) References cited:
- EP-A2- 1 372 302
- CN-A- 101 030 843
- CN-A- 101 052 073
- DE-A1- 10 125 884
- US-A1- 2004 055 016
- "Gateway control protocol: Decomposed multipoint control unit, audio, video and data conferencing packages; H.248.19 (03/04)", ITU-T STANDARD IN FORCE (I), INTERNATIONAL TELECOMMUNICATION UNION, GENEVA, CH, no. H.248.19 (03/04), 15 March 2004 (2004-03-15), XP017401384,

## Description

### FIELD OF THE INVENTION

The present invention relates to communication and computer technologies, and in particular, to a method, an apparatus, and a system for creating and operating a conference.

### BACKGROUND OF THE INVENTION

As the communication and computer technologies progress, among the telecommunications services based on an Internet Protocol (IP) network, conferences (including audio conferences, multimedia conferences, and data conferences) are more and more prevalent. In the standard based on an ITU-T H.323 architecture, the conference service is implemented through a network component called Multipoint Control Unit (MCU). An MCU includes two logical components: Media Controller (MC) and Media Processor (MP).

In conference implementation, each terminal involved in the conference creates a point-to-point connection of an H.245 control channel with the MC in the MCU. The MC exercises centralized control over the whole conference. The audio channel, video channel and data channel of each terminal involved in the conference form a media channel with the MP in the MCU. This MP performs audio mixing, video interaction or mixing, and T.120 data allocation for media streams sent by each terminal involved in the conference, and then sends the processed audios, videos and data streams back to each terminal.

In a 3rd Generation Partnership Project (3GPP) protocol architecture, the implementation of a conference still draws upon the concept of MCU. The MC in the MCU receives an instruction (for example, for creating a conference, adding an attendee into a conference, or leaving a conference) about conference services from a conference Application Server (AS). The MC delivers the instruction about the conference to the MP, and the MP performs media operations for the conference (for example, adding a media mixer, adding a media mixing channel, and modifying an attendee stream mode).

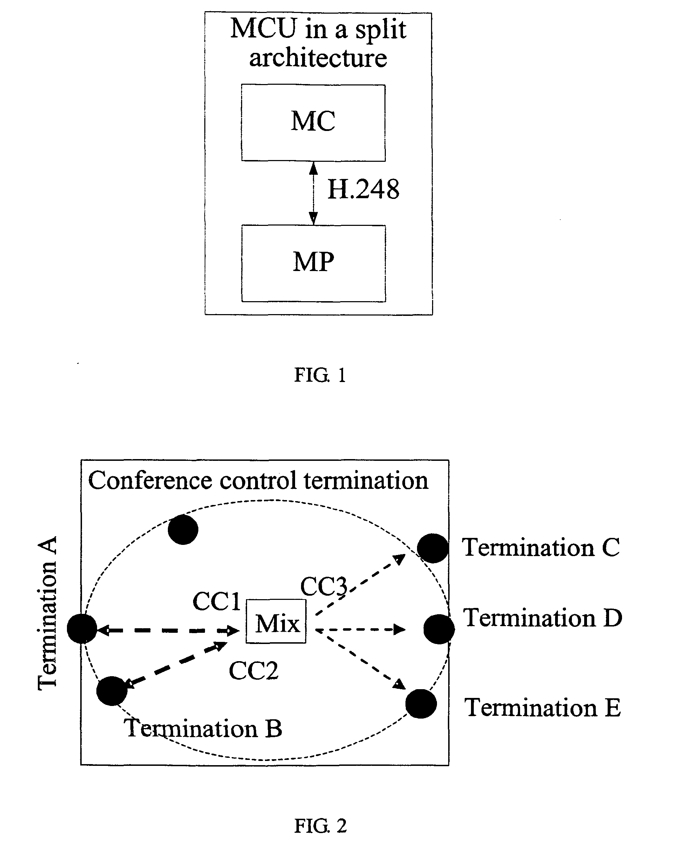

According to ITU-T H.248.19, a split architecture refers to an architecture in which the MC is physically separated from the MP. FIG. 1 shows a split architecture.

In a split architecture, the MP is a pure media processor which bears no service, and the service-related control operations are performed by the AS and the MC. The MC converts service implementation into specific operations for the media, and deliver the operations to the MP. The MP implements the media operations.

In an IMS architecture, a Multimedia Resource Function Controller (MRFC) provides the functions of an MC, and a Multimedia Resource Function Processor (MRFP) provides the functions of an MP. According to 3GPP 23.002, the interface between the MRFC and the MRFP is defined as an Mp interface, which is based on the ITU-T H.248 protocol.

In the H.248 protocol, two important concepts are:
Termination: To put it simply, a user that attends a conference exists as a termination in the MC or MP; and
Context: A context accommodates terminations, and terminations are connected through a certain topology in the context.
Note: A media mixing apparatus is hereinafter referred to as a Mix.

In 3GPP 23.228, Ad hoc conferences are defined. The simplest Ad hoc conference is a three-party service. The 3GPP 23.228 stipulates that a three-party service derives from an ordinary two-party service. In an ordinary two-party service, no Mix is required, and two users can be interconnected directly, or interconnected after encoding or decoding conversion. When a two-party service changes to a three-party service, a Mix needs to be applied for, the topology connection of user terminations needs to be modified, and all user terminations that attend the conference need to be connected with the Mix.

EP 1372302 A2 discloses a context is an association between terminations and the context is an entity that has been created for the period of the conference. Furthermore, the context is initiated by the MC, constructed by the MPMM. In the resource management, the MG manages the resources of the MP and MGW. The MC selects the appropriate MP or MGW and the appropriate type of terminations in the MP and MGW which will be involved in the conference, and the required properties for the conference are that all end-points are video, audio and data end-points, the conference type is video transcoding, and all the participants see the current loudest speaker while the speaker sees the previous one.

US 2004/055016 refers to a method of providing control by a client of a Web-cast from a telephone, wherein the method comprises the following steps: receiving content data indicative of Web-cast parameters; receiving content data from a first telephone; endcoding the content data into streaming content; and initiating the streaming of streaming content.

### SUMMARY OF THE INVENTION

The embodiments of the present invention provide a method, an apparatus, and a system for creating a conference to implement smooth handover from a two-party service to a three-party service in a reserved conference.

A method for creating a conference in an embodiment of the present invention includes:
by an MP, creating a conference context according to a received instruction, and adding a conference control termination on the conference context; wherein the conference control termination represents existence of the conference; wherein the conference is a reserved conference and the attributes that represent the whole conference are delivered to the conference control termination at the time of creating the conference; wherein the conference control termination operates a conference site of the conference; wherein operations for the conference site include: recording for the conference site and playing for the conference site; and applying for conference resources according to a received instruction of modifying attributes of the conference control termination, and modifying current attributes of the conference control termination to create a conference.

An MP provided in an embodiment of the present invention includes:
a receiving unit, configured to receive an instruction of creating a conference and an instruction of modifying attributes of a conference control termination;
a creating unit, configured to create a conference context according to the instruction;
an adding unit, configured to add a conference control termination on the conference context according to the instruction; wherein the conference control termination represents existence of the conference; wherein the conference is a reserved conference and the attributes that represent the whole conference are delivered to the conference control termination at the time of creating the conference; wherein the conference control termination operates a conference site of the conference; wherein operations for the conference site include: recording for the conference site and playing for the conference site;
an applying unit, configured to apply for conference resources according to the received instruction of modifying the attributes of the conference control termination; and
a modifying unit, configured to modify current attributes of the conference control termination according to the received instruction of modifying the attributes of the conference control termination.

A system for creating a conference in an embodiment of the present invention includes:
an MC, configured to send an instruction of creating a conference context, an instruction of adding a conference control termination, and an instruction of modifying attributes of the conference control termination; and
an MP, configured to: create the conference context according to the received instruction, add the conference control termination on the conference context, wherein the conference control termination represents existence of the conference; wherein the conference is a reserved conference and the attributes that represent the whole conference are delivered to the conference control termination at the time of creating the conference; wherein the conference control termination operates a conference site of the conference; wherein operations for the conference site include: recording for the conference site and playing for the conference site; apply for conference resources according to the received instruction of modifying the attributes of the conference control termination, and modify current attributes of the conference control termination to create a conference.

In the embodiments of the present invention, at the time of creating a conference, the attributes of the conference are delivered to the conference control termination, and the attributes describe the features of the conference and indicate that the service is a conference service. Therefore, the MP can apply for conference resources according to the attributes at the beginning of the conference, and unsmooth handover from a two-party service to a three-party service is avoided.

### BRIEF DESCRIPTION OF THE DRAWINGS

To illustrate the technical solution according to the embodiments of the present invention or in the prior art more clearly, the accompanying drawings for describing the embodiments or the prior art are introduced briefly below. Apparently, the accompanying drawings in the following description are only some embodiments of the present invention, and persons of ordinary skill in the art can derive other drawings from the accompanying drawings without creative efforts.
FIG. 1 shows a split architecture in the prior art;
FIG. 2 shows a conference context according to an embodiment of the present invention;
FIG. 3 is a flowchart of a method for creating a conference according to an embodiment of the present invention;
FIG. 4 shows a structure of an MP according to an embodiment of the present invention;
FIG. 5 is a flowchart of a method for operating a conference according to an embodiment of the present invention;
FIG. 6 shows a structure of another MP according to an embodiment of the present invention;
FIG. 7 shows a conference context according to a first embodiment of the present invention;
FIG. 8 is a flowchart of the first embodiment of the present invention;
FIG. 9 is a flowchart of a second embodiment of the present invention;
FIG. 10 shows a conference context according to a third embodiment of the present invention;
FIG. 11 is a flowchart of the third embodiment of the present invention;
FIG. 12 shows a conference context according to a fourth embodiment of the present invention;
FIG. 13 is a flowchart of a fifth embodiment of the present invention; and
FIG. 14 is a flowchart of a sixth embodiment of the present invention.

### DETAILED DESCRIPTION OF THE EMBODIMENTS

In the process of researching and practicing the prior art, the inventor finds that the current 3GPP defines no specific mechanism for implementing reserved conferences, but implements the reserved conferences in the mode of implementing Ad hoc conferences. Therefore, in the implementation of a reserved conference in the prior art, the handover from a two-party service to a three-party service is unsmooth; and for an Ad hoc conference, it is impossible to perform relevant operations for the whole conference.

The following detailed description is directed to the technical solution of the present invention with reference to the accompanying drawings. However, the embodiments to be described are only a part of, but not all of, the embodiments of the present invention. In addition, all other embodiments, which can be derived by those skilled in the art from the embodiments given herein without creative efforts, fall within the scope of the present invention.

In the embodiments of the present invention, a special termination is defined. The termination is not related to any user that attends the conference, but is a control termination called "conference control termination".

FIG. 2 shows a conference context. In a reserved conference, the MC instructs the MP to add a conference control termination at the time of creating a conference context in the process of creating a conference; in an Ad hoc conference, the MC instructs the MP to add the conference control termination in the conference context anytime after the conference begins.

It is assumed that terminations A, B, C, D, and E are attending terminations, and each of them represents an attending user; the Mix is an apparatus for mixing media; and CC1, CC2, and CC3 are media mixing channels.

A conference control termination has the attributes that represent the whole conference, and can operate a conference site:
1. The conference control termination represents existence of the conference. In a reserved conference, the conference control termination is added at the time of creating the conference, survives when the conference exists, and disappears when the conference is cleared; in an Ad hoc conference, the conference control termination is added anytime after the conference begins, survives when the conference exists, and disappears when the conference is cleared.
2. For a reserved conference, the attributes that represent the whole conference are delivered on the termination at the time of creating the conference.

Specifically, for a reserved conference, at the time of creating the conference, the MC adds the conference control termination when notifying the MP to create a conference context, and delivers the information such as attendee quantity, conference type (audio conference, multimedia conference, data conference, and so on), maximum number of audio mixing parties, and conference ID on the conference control termination.

According to the attendee quantity and the maximum number of audio mixing parties, better Mix resources can be selected on the MP. According to the conference type, the conference ID can be allocated on the MP; according to the conference ID, the whole process of the conference call is tracked. According to the conference ID, the MP knows that the service is a conference service, and applies for the Mix directly at the time of creating the conference, without drawing upon the implementation mode of the Ad hoc conference. In this way, unsmooth handover from a two-party service to a multi-party service as a result of applying for the Mix is avoided.
3. Operations are performed for the whole conference (reserved conference or Ad hoc conference). The operations for the whole site include:
   recording (including audio recording and multimedia recording) for the site, and playing (including audio play and multimedia play) for the site. The corresponding operations can be delivered on a conference control termination. For an Ad hoc conference, the prior art provides no mode of implementing the operations for the whole conference; if a reserved conference is implemented in the mode of implementing the Ad hoc conference, the operations for the whole conference are unavailable.

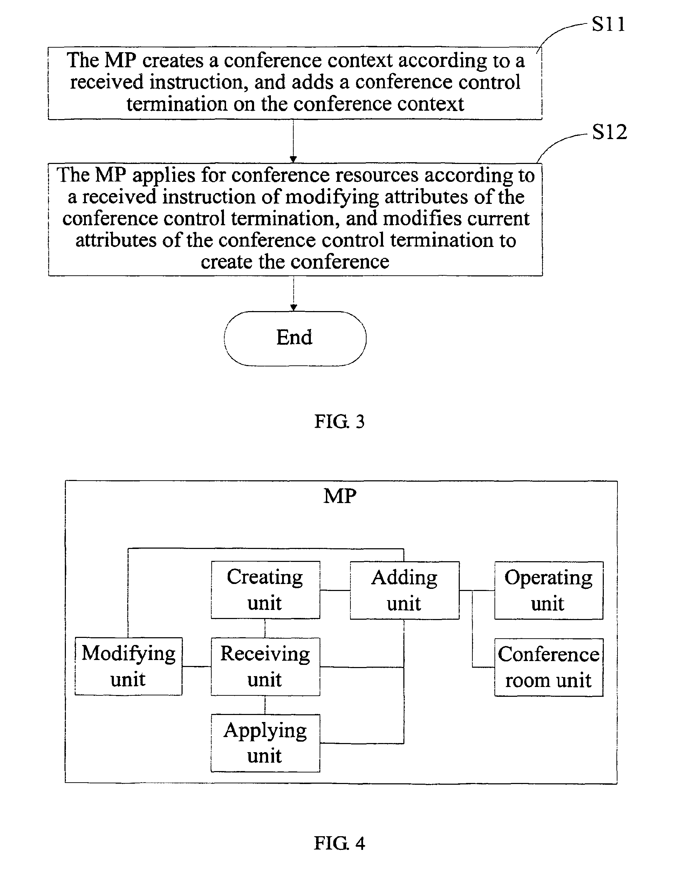

Based on the foregoing conference control termination, a method for creating a conference (especially, a reserved conference) is provided in an embodiment of the present invention. As shown in FIG. 3, the method includes:
Step 11: An MP creates a conference context according to a received instruction, and adds a conference control termination on the conference context; and
Step 12: The MP applies for conference resources (specifically, media mixing resources) according to a received instruction of modifying attributes of the conference control termination, and modifies current attributes (including: conference ID, attendee quantity, and stream attribute) of the conference control termination to create a conference.

After the conference is created, the method may further include: The MP applies for resources according to information received by the conference control termination about an operation for the conference (the information includes operation instructions and operation parameters, and is the same hereinafter), and performs the operation.

Upon completion of creating the conference, the MP may use the conference resources (specifically, media mixing resources) to open a conference room through the conference control termination.

An MP is provided in an embodiment of the present invention. As shown in FIG. 4, the MP includes: a receiving unit, a creating unit, an adding unit, an applying unit, and a modifying unit; and may further include an operating unit and/or a conference room unit.

The receiving unit is configured to receive an instruction of creating a conference and an instruction of modifying attributes of a conference control termination.

The creating unit is configured to create a conference context according to the instruction. The conference context is configured to bear the conference control termination.

The adding unit is configured to add a conference control termination on the conference context according to the instruction.

The applying unit is configured to apply for conference resources (specifically, media mixing resources) according to the received instruction of modifying the attributes of the conference control termination.

The modifying unit is configured to modify current attributes (including the conference ID, attendee quantity, and stream attribute) of the conference control termination according to the received instruction of modifying the attributes of the conference control termination.

The operating unit is controlled by the conference control termination added by the adding unit, and is configured to: apply for resources according to received information about an operation for the conference, and perform the operation.

The conference room unit is controlled by the conference control termination added by the adding unit, and is configured to use the conference resources (specifically, media mixing resources) applied for by the applying unit to open a conference room.

A system for creating a conference is provided in an embodiment of the present invention. The system includes an MC and an MP.

The MC is configured to send an instruction of creating a conference context, an instruction of adding a conference control termination, and an instruction of modifying attributes of the conference control termination. The MC may be further configured to send information about an operation for the conference.

The MP is configured to: create the conference context according to the received instruction, and add the conference control termination on the conference context; and apply for conference resources according to the received instruction of modifying the attributes of the conference control termination, and modify current attributes of the conference control termination to create a conference. The MP may be further configured to apply for resources according to information received by the conference control termination about an operation for the conference, and perform the operation.

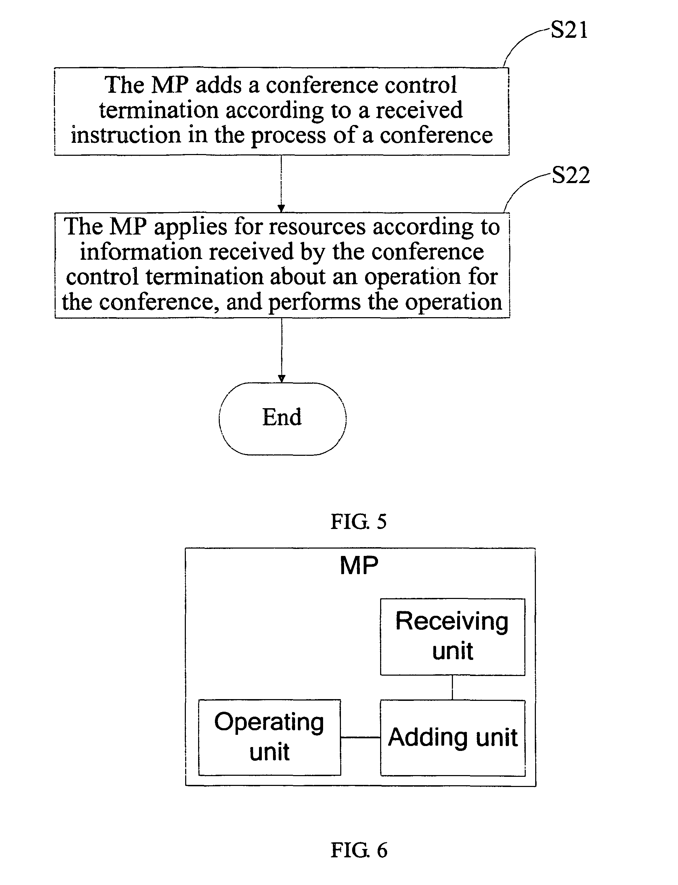

A method for operating a conference is provided in an embodiment of the present invention. As shown in FIG. 5, the method includes:
Step 21: An MP adds a conference control termination according to a received instruction in the process of a conference; and
Step 22: The MP applies for resources according to information received by the conference control termination about an operation for the conference, and performs the operation.

Another MP is provided in an embodiment of the present invention. As shown in FIG. 6, the MP includes:
a receiving unit, configured to receive an instruction of adding a conference control termination;
an adding unit, configured to add the conference control termination according to the instruction; and
an operating unit, which is controlled by the conference control termination added by the adding unit, and is configured to: apply for resources according to received information about an operation for the conference, and perform the operation.

A system for operating a conference in an embodiment of the present invention includes:
an MC, configured to send an instruction of adding a conference control termination in the process of a conference and information about an operation for the conference; and
an MP, configured to: add the conference control termination according to the received instruction, apply for resources according to the information received by the conference control termination about an operation for the conference, and perform the operation.

The present invention is elaborated below through six embodiments.

### First Embodiment

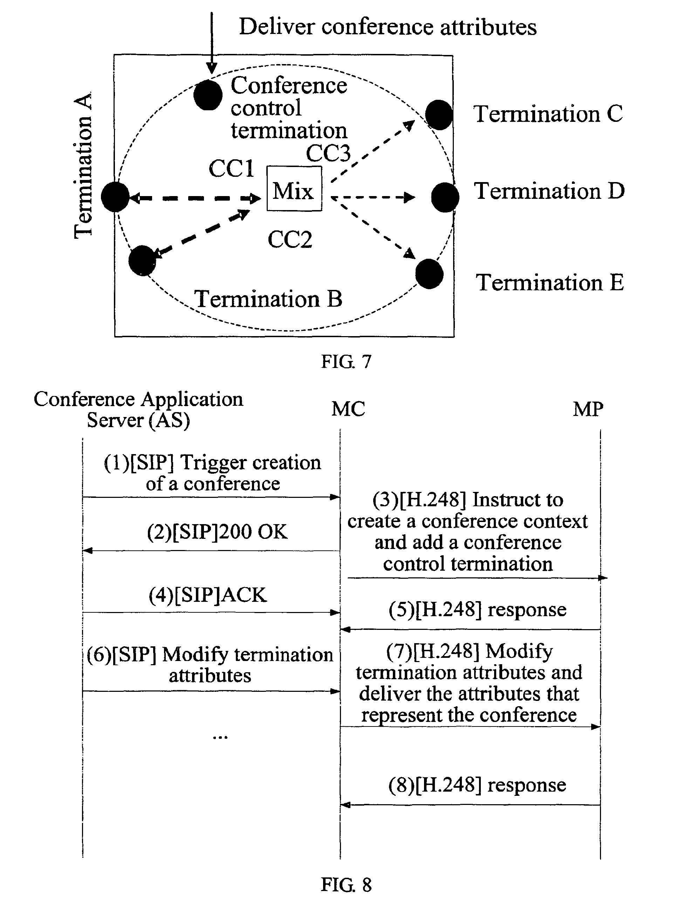

This embodiment is the first embodiment of creating a conference (not limited to reserved conferences). FIG. 7 shows a conference context in this embodiment. It is assumed that terminations A, B, C, D, and E are attending terminations, and each of them represents an attending user; the Mix is an apparatus for mixing media; CC1, CC2, and CC3 are media mixing channels; and the conference attributes are delivered from the conference control termination.

FIG. 8 is a flowchart of this embodiment, which includes:
Step (1): It is assumed that the creation of the conference is triggered by the AS through a Session Initiation Protocol (SIP) message (not limited to a SIP message). The AS sends a SIP message to the MC to create a conference.
Step (2): After receiving the SIP message from the AS, the MC comprehends the content of the message, accepts the request, and returns a 200 OK message to the AS.
Step (3): The MC converts the SIP message for creating the conference into an H.248 message, and sends the message to the MP, instructing the MP to create a conference context and add a termination as a conference control termination.
Step (4): After receiving the 200 OK message from the MC, the AS returns an ACK message.
Step (5): Upon completion of creating the conference context and adding the conference control termination, the MP returns an H.248 response message to the MC.
Step (6): The AS sends a SIP message that carries the conference attributes such as conference ID, attendee quantity (for example, 4 in this embodiment), and maximum number of audio mixing parties (or any other attributes that represent the conference).
Step (7): After receiving the SIP message from the AS, the MC converts the SIP message into an H.248 message, converts the conference attributes carried in the SIP message into an H.248 packet format, and sends the message to the MP, instructing the MP to modify the attributes of the conference control termination.
Step (8): After receiving the H.248 message with the modified termination attributes, the MP knows the attributes of the conference, modifies the attributes of the conference control termination according to the conference attributes, and applies for Mix resources accordingly. Afterward, the MP returns an H.248 response message to the MC.

Note:
I: No strict sequence relation exists between step (2) and step (3).
II: Step (4) is independent of step (3), and the message in step (4) is sent no matter whether the message in step (3) is sent successfully or not.
III: The message exchange between the AS and the MC after step (6) is omitted.

### Second Embodiment

This embodiment is the second embodiment of creating a conference (not limited to reserved conferences).

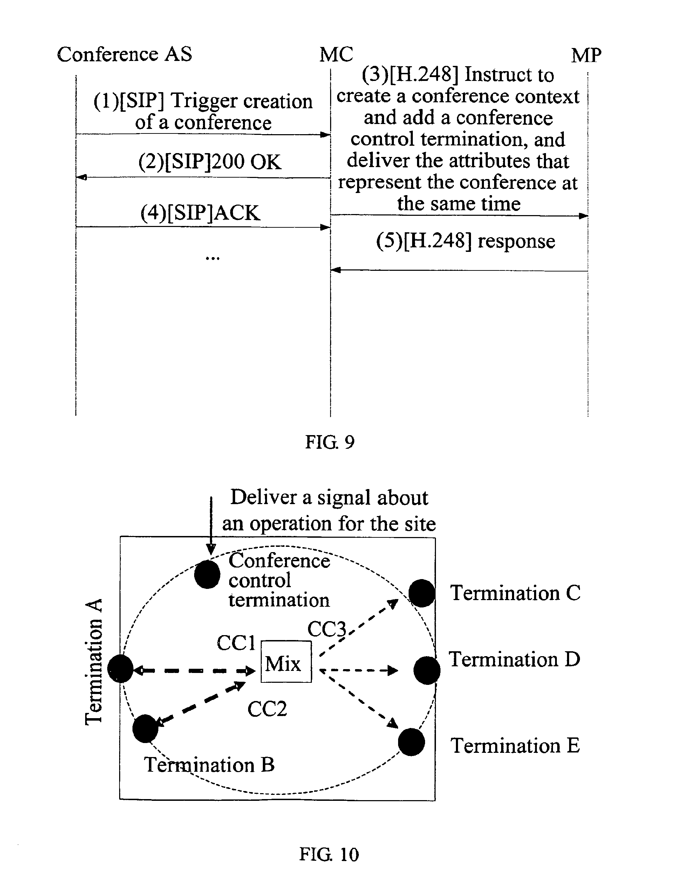

In the first embodiment above, for the operation of creating a conference context and the operation of adding a conference control termination and modifying the attributes of the termination, two H.248 messages are delivered to the MP. In fact, the two operations can be combined into one. As shown in FIG. 9, the process includes:
Step (1): It is assumed that the creation of the conference is triggered by the AS through a SIP message (not limited to a SIP message). The AS sends a SIP message to the MC to create a conference. The SIP message carries the conference attributes such as conference ID, attendee quantity, the maximum number of audio mixing parties (or any other attributes that represent the conference).
Step (2): After receiving the SIP message from the AS, the MC comprehends the content of the message, accepts the request, and returns a 200 OK message to the AS.
Step (3): The MC converts the SIP message for creating a conference into an H.248 message, converts the conference attributes carried in the SIP message into an H.248 packet format, and sends the H.248 message to the MP, instructing the MP to create a conference context, add a termination as a conference control termination and modify the attributes of the conference control termination.
Step (4): After receiving the 200 OK message from the MC, the AS returns an ACK message.
Step (5): After receiving the H.248 message from the MC, the MP performs these operations: creating a conference context, add a conference control termination, obtaining the attributes of the conference, applying for Mix resources according to the conference attributes, and modifying the attributes of the conference control termination according to the conference attributes. Afterward, the MP returns an H.248 response message to the MC.

Note:
I: No strict sequence relation exists between step (2) and step (3).
II: Step (4) is independent of step (3), and the message in step (4) is sent no matter whether the message in step (3) is sent successfully or not.

### Third Embodiment

This embodiment is a first embodiment of operating a site (not limited to sites of reserved conferences). FIG. 10 shows a conference context in this embodiment. It is assumed that terminations A, B, C, D, and E are attending terminations, and each of them represents an attending user; the Mix is an apparatus for mixing media; CC1, CC2, and CC3 are media mixing channels; and the site operation signal is delivered from the conference control termination.

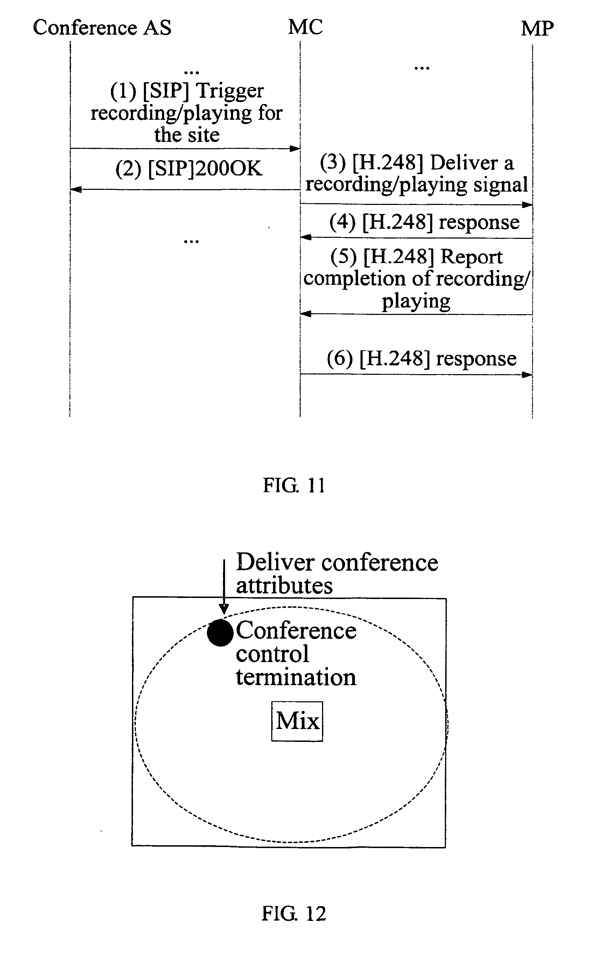

FIG. 11 is a flowchart of this embodiment, which includes:
Step (1): The AS sends a SIP message to the MC, notifying the MC to perform site recording or playing. The message carries recording or playing parameters, for example, recording or playing duration, the filename to be recorded or the file to be played, and coding and decoding information.
Step (2): After receiving the SIP message from the AS, the MC comprehends the content of the message, accepts the request, and returns a 200 OK message to the AS.
Step (3): The MC converts the SIP message into an H.248 message, converts the carried recording/playing information into an H.248 packet forward, and delivers the message to the MP.
Step (4): After the conference control termination (the process of adding a conference control termination is described in the first embodiment or second embodiment) receives a recording command or playing command, the MP applies for resources required for the recording or playing through the conference control termination, performs recording or playing, and then returns a response to the MC.
Step (5): Upon completion of recording, the MP reports the completion of recording to the MC through the conference control termination.
Step (6): The MC returns a response to the MP.

Note:
I: No strict sequence relation exists between step (2) and step (3).
II: The message exchange between the AS and the MC after step (2) is omitted.
III: In the process described above, the stop of the recording or playing is controlled through duration delivered by the MC. A recording/playing duration timer is started on the MP. When the timer expires, the MP reports service completion to the MC.

Alternatively, the stop of the recording or playing is controlled through the termination user. In this case, the MC needs to deliver a Dual Tone Multi Frequency (DTMF) digit detection event on the MP. When the user needs to stop (or perform other operations for controlling the recording or playing), the user presses the corresponding key on the termination. The MP detects the DTMF signal from the termination, and reports the signal to the MC. The MC interprets the meaning of the pressed key (for example, stop, suspend, or response suspend). Finally, the MC delivers the corresponding H.248 message to the MP.

### Fourth Embodiment

This embodiment implements the functions of a conference room (not limited to the conference room of a reserved conference). FIG. 12 shows a conference context in this embodiment, where the conference attributes are delivered from a conference control termination.

In a traditional conference implementation mechanism, the creation of a conference session begins with the attending of the first user, and the functions of the conference room are not supported.

In light of the first embodiment or second embodiment herein, a conference context can be created before the beginning of a conference through a conference control termination, and more conference control terminations can be added. According to the conference context, the MP knows that the session is a conference, and applies for and reserves the resources required for the conference. The resources required for a conference include: software resources (such as memory) and hardware resources (such as Mix) required for holding a conference. The conference control termination in the MP may use the software resources and hardware resources to open a conference room.

As shown in FIG. 12, a conference context includes only one termination, namely, a conference control termination. The MC delivers the attributes of the conference on this termination. According to the attributes, the MP reserves resources, including software resources (such as memory) and hardware resources (such as Mix).

In this way, the attendee can access the conference room to attend the conference anytime. Upon completion of the conference, the AS may retain the conference room. If the AS chooses to retain the conference room, the conference context on the MP, the conference control termination, and the related resources keep surviving. The AS may also choose to release the conference room. In this case, the MC instructs the MP to release both the conference context and the conference control termination, and the MP releases the software and hardware resources related to the conference room at the same time.

### Fifth Embodiment

This embodiment is a second embodiment of operating a site.

According to the service features, an Ad hoc conference involves handover from a two-party service to a three-party service. The service begins with an ordinary two-party session, and the MP is unable to foresee whether the session is a conference service and is unable to add a conference control termination beforehand. Even so, a conference control termination may be added in the process of the conference (namely, at any time from beginning of the conference to end of the conference) for the purpose of playing or recording on the site.

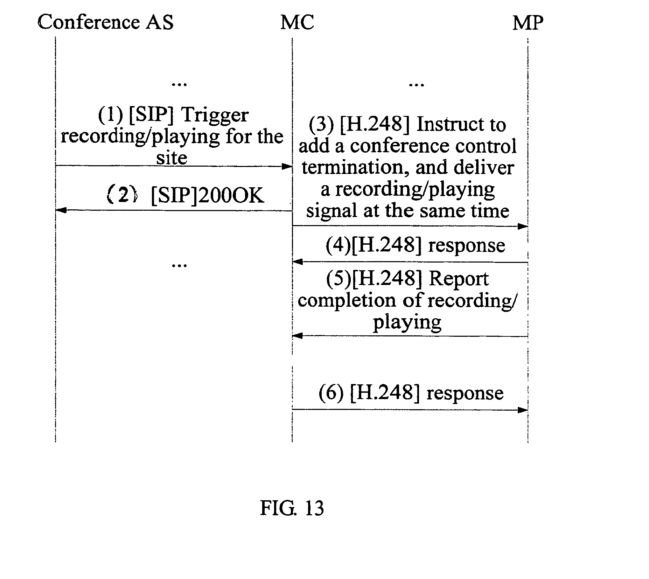

As shown in FIG. 13, the process includes:
Step (1): The AS sends a SIP message to the MC, notifying the MC to perform site recording or playing. The message carries recording or playing parameters, for example, recording/playing duration, the filename to be recorded or the file to be played, and coding and decoding information.
Step (2): After receiving the SIP message from the AS, the MC comprehends the content of the message, accepts the request, and returns a 200 OK message to the AS.
Step (3): The MC converts the SIP message into an H.248 message, and converts the recording/playing information into an H.248 packet forward. The H.248 message carries an instruction of adding a conference control termination, and is delivered to the MP.
Step (4): After receiving the H.248 message, the MP adds a conference control termination according to the instruction of adding a conference control termination in the H.248 message. Then, the MP delivers the H.248 message to the conference control termination. After receiving the H.248 message, the conference control termination obtains the recording or playing information from the message. Through the conference control termination, the MP applies for the required resources according to the recording or playing information in the H.248 message, performs recording or playing, and then returns a response to the MC.
Step (5): Upon completion of recording, the MP reports the completion of recording to the MC.
Step (6): The MC returns a response to the MP.

Note:
I: No strict sequence relation exists between step (2) and step (3).
II: The message exchange between the AS and the MC after step (2) is omitted.
III: In the process described above, the stop of the recording or playing is controlled through duration delivered by the MC. A recording/playing duration timer is started on the MP. Upon expiry of the timer, the MP reports service completion to the MC.

The stop of the recording or playing may also be controlled through the termination user. In this case, the MC needs to deliver a DTMF digit detection event on the MP. When the user needs to stop (or perform other operations for controlling the recording or playing), the user presses the corresponding key on the termination. The MP detects the DTMF signal from the termination, and reports the signal to the MC. The MC interprets the meaning of the pressed key (for example, stop, suspend, or response suspend). Finally, the MC delivers the corresponding H.248 message to the MP.

### Sixth Embodiment

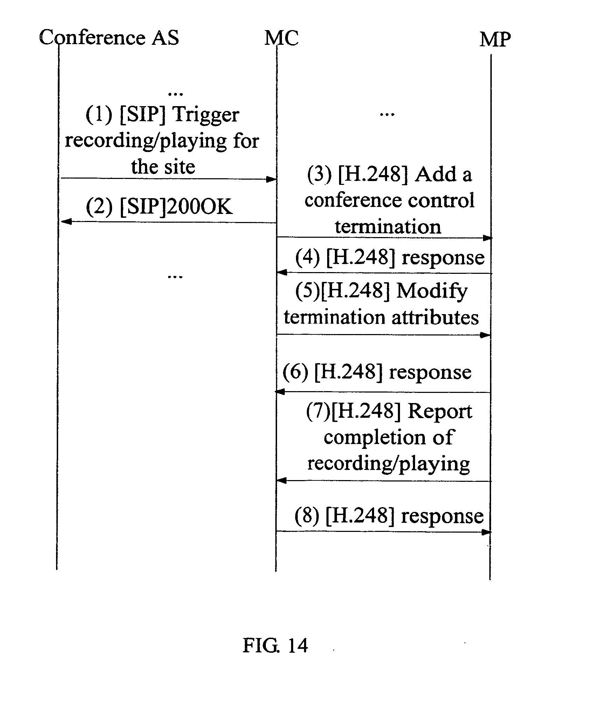

This embodiment is a third embodiment of operating a site. As shown in FIG. 14, the process includes:
Step (1): The AS sends a SIP message to the MC, indicating the need of recording or playing on the site.
Step (2): After receiving the SIP message from the AS, the MC comprehends the content of the message, accepts the request, and returns a 200 OK message to the AS.
Step (3): The MC converts the SIP message into an H.248 message. The H.248 message carries an instruction of adding a conference control termination, and is delivered to the MP.
Step (4): After receiving the message that carries the instruction of adding a conference control termination from the MC, the MP adds a conference control termination, and then sends a response to the MC.
Step (5): The MC delivers a message to the MP. The message carries an instruction of modifying termination attributes, an instruction of recording or playing, and recording or playing parameters such as recording or playing duration, the filename to be recorded or the file to be played, and coding and decoding information.
Step (6): After receiving the message that carries the instruction of modifying the termination attributes through the conference control termination, the MP obtains the instruction of recording or playing, and the recording or playing parameters. According to the parameters, the MP applies for recording or playing resources, performs recording or playing, and returns an H.248 response to the MC.
Step (7): Upon completion of recording, the MP reports the completion of recording to the MC.
Step (8): The MC returns an H.248 response to the MP.

Note:
I: No strict sequence relation exists between step (2) and step (3).
II: The message exchange between the AS and the MC after step (2) is omitted.
III: In the process described above, the stop of the recording or playing is controlled through duration delivered by the MC. A recording/playing duration timer is started on the MP. Upon expiry of the timer, the MP reports service completion to the MC.

The stop of the recording or playing may also be controlled through the termination user. In this case, the MC needs to deliver a DTMF digit detection event on the MP. When the user needs to stop (or perform other operations for controlling the recording or playing), the user presses the corresponding key on the termination. The MP detects the DTMF signal from the termination, and reports the signal to the MC. The MC interprets the meaning of the pressed key (for example, stop, suspend, or response suspend). Finally, the MC delivers the corresponding H.248 message to the MP.

In the embodiments described above, the interface between the MC and the MP is based on H.248. Nevertheless, the embodiments of the present invention are also applicable if the interface is based on Media Gateway Control Protocol (MGCP).

In conclusion, the embodiments of the present invention put forward a concept of conference control termination. The termination represents existence of a conference.
(1) At the time of creating a conference, the attributes of the conference are delivered on the conference control termination, and the attributes describe the features of the conference and indicate that the service is a conference service. According to the attributes, the MP applies for a Mix at the beginning of the conference, without involving the handover from existence of a Mix to non-existence of the Mix in the process of the conference. Therefore, the internal operations of the MP are simple, the attending users feel no noise, and unsmooth handover from a two-party service to a three-party service is avoided.
(2) The conference control termination represents existence of the conference, and is a logical entity that represents the conference. Therefore, the operations for the site can be delivered on this termination.
(3) In a traditional conference implementation mechanism, the creation of a conference session begins with the attending of the first user, and the functions of the conference room are not supported. With the conference control termination, before the conference begins, a conference context can be created beforehand, more conference control terminations can be added, and the conference resources can be applied for. The conference control termination in the MP can use the conference resources to open a conference room, thus facilitating the attendee to attend the conference.
(4) For an Ad hoc conference, the conference control termination can be added anytime after the conference begins, and an operation can be performed for the whole conference through operation on this termination.

It will be apparent to persons skilled in the art that various modifications and variations can be made to the present invention without departing from the scope of the invention. The invention shall cover the modifications and variations provided that they fall in the scope of protection defined by the appended claims or their equivalents.

## Claims

1. A method for creating a conference, comprising:
by a Media Processor, MP, creating a conference context according to a received instruction, and adding a conference control termination on the conference context (S11); wherein the conference control termination represents existence of the conference; wherein the conference is a reserved conference and the attributes that represent the whole conference are delivered to the conference control termination at the time of creating the conference; wherein the conference control termination operates a conference site of the conference; wherein operations for the conference site include: recording for the conference site and playing for the conference site; and
applying for conference resources according to a received instruction of modifying attributes of the conference control termination, and modifying current attributes of the conference control termination to create a conference (S12).

2. The method of claim 1, wherein after the conference is created, the method further comprises:
by the MP, applying for resources according to information received by the conference control termination about an operation for the conference, and performing the operation.

3. The method of claim 2, wherein:
if the operation for the conference is a playing operation or a recording operation, the information received by the conference control termination about the operation for the conference comprises duration information; the MP starts a timer according to the duration information and terminates the operation through the conference control termination upon expiry of the timer.

4. The method of claim 2, wherein:
if the operation for the conference is a playing operation or a recording operation, the MP presets a Dual Tone Multi-Frequency, DTMF, digit detection event to resolve the instruction sent by a termination side, and starts and terminates the operation accordingly.

5. The method of claim 1, wherein:
the MP uses the conference resources to open a conference room through the conference control termination.

6. A Media Processor, MP, comprising:
a receiving unit, configured to receive an instruction of creating a conference and an instruction of modifying attributes of a conference control termination;
a creating unit, configured to create a conference context according to the instruction of creating the conference;
an adding unit, configured to add the conference control termination on the conference context according to the instruction of creating the conference; wherein the conference control termination represents existence of the conference; wherein the conference is a reserved conference and the attributes that represent the whole conference are delivered to the conference control termination at the time of creating the conference; wherein the conference control termination operates a conference site of the conference; wherein operations for the conference site include: recording for the conference site and playing for the conference site;
an applying unit, configured to apply for conference resources according to the received instruction of modifying the attributes of the conference control termination; and
a modifying unit, configured to modify current attributes of the conference control termination according to the received instruction of modifying the attributes of the conference control termination.

7. The MP of claim 6, further comprising:
an operating unit, which is controlled by the conference control termination added by the adding unit, and is configured to: apply for resources according to information received by the conference control termination about an operation for the conference, and perform the operation.

8. The MP of claim 6, further comprising:
a conference room unit, which is controlled by the conference control termination added by the adding unit, and is configured to use the conference resources applied for by the applying unit to open a conference room.

9. A system for creating a conference, comprising:
a Media Controller, MC, configured to send an instruction of creating a conference context, an instruction of adding a conference control termination, and an instruction of modifying attributes of the conference control termination; and
a Media Processor, MP, configured to: create the conference context according to the received instruction of creating the conference context, and add the conference control termination to the conference context according to the received instruction of adding the conference control termination; wherein the conference control termination represents existence of the conference; wherein the conference is a reserved conference and the attributes that represent the whole conference are delivered on the conference control termination at the time of creating the conference; wherein the conference control termination operates a conference site of the conference; wherein operations for the conference site include: recording for the conference site and playing for the conference site; and apply for conference resources according to the received instruction of modifying the attributes of the conference control termination, and modify current attributes of the conference control termination to create a conference.

10. The system of claim 9, wherein:
the MC sends information about an operation for the conference; and
the MP applies for resources according to the information received by the conference control termination about the operation for the conference, and performs the operation.

## Patentansprüche

1. Verfahren zum Erzeugen einer Konferenz, das die Schritte aufweist:
Erzeugen durch einen Medienprozessor, MP, eines Konferenzkontextes gemäß einem empfangenen Befehl, und Hinzufügen eines Konferenzsteuerungsabschlusses zum Konferenzkontext (S 11); wobei der Konferenzsteuerungsabschluss Vorh andensein der Konferenz repräsentiert; wobei die Konferenz eine reservierte Konferenz ist und die Attribute, die die gesamte Konferenz repräsentieren, zur Zeit der Erzeugung der Konferenz an den Konferenzsteuerungsabschluss geliefert werden; wobei der Konferenzsteuerungsabschluss einen Konferenzstandort der Konferenz betreibt; wobei Operationen für den Konferenzstandort umfassen: Aufzeichnen für den Konferenzstandort und Wiedergeben für den Konferenzstandort; und
Beantragen von Konferenzressourcen gemäß einem empfangenen Befehl zum Modifizieren der Attribute des Konferenzsteuerungsabschlusses, und Modifizieren gegenwärtiger Attribute des Konferenzsteuerungsabschlusses, um eine Konferenz (S 12) zu erzeugen.

2. Verfahren nach Anspruch 1, wobei nachdem die Konferenz erzeugt ist, das Verfahren ferner aufweist:
Beantragen von Ressourcen durch den MP gemäß I nformationen, die durch den Konferenzsteuerungsabschluss empfangen werden, über eine Operation für die Konferenz, und Durchführen der Operation.

3. Verfahren nach Anspruch 2, wobei:
wenn die Operation für die Konferenz eine Wiedergabeoperation oder eine Aufzeichnungsoperation ist, die Informationen, die durch den Konferenzsteuerungsabschluss empfangen werden, über die Operation für die Konferenz Dauerinformationen enthalten; der MP gemäß den Dauerinformationen einen Zeitgeber startet und die Operation durch den Konferenzsteuerungsabschluss beim Ablauf des Zeitgebers beendet.

4. Verfahren nach Anspruch 2, wobei:
wenn die Operation für die Konferenz eine Wiedergabeoperation oder eine Aufzeichnungsoperation ist, der MP ein Doppeltonmehrfrequenz-Ziffernermittlungsereignis (Dual Tone Multi-Frequency digit detection event, DTMF-Ziffernermittlungsereignis) voreinstellt, um den Befehl aufzulösen, der durch eine Abschlussseite gesendet wird, und die Operation entsprechend startet und beendet.

5. Verfahren nach Anspruch 1, wobei:
der MP die Konferenzressourcen verwendet, um einen Konferenzraum durch den Konferenzsteuerungsabschluss zu öffnen.

6. Medienprozessor, MP, der Folgendes aufweist:
eine Empfangseinheit, die konfiguriert ist, einen Befehl zum Erzeugen einer Konferenz und einen Befehl zum Modifizieren der Attribute eines Konferenzsteuerungsabschlusses zu empfangen;
eine Erzeugungseinheit, die konfiguriert ist, gemäß dem Befehl zum Erzeugen der Konferenz einen Konferenzkontext zu erzeugen;
eine Hinzufügungseinheit, die konfiguriert ist, den Konferenzsteuerungsabschluss gemäß dem Befehl zum Erzeugen der Konferenz zum Konferenzkontext hinzuzufügen; wobei der Konferenzsteuerungsabschluss Vorhandensein der Konferenz repräsentiert; wobei die Konferenz eine reservierte Konferenz ist und die Attribute, die die gesamte Konferenz repräsentieren, zur Zeit der Erzeugung der Konferenz an den Konferenzsteuerungsabschluss geliefert werden; wobei der Konferenzsteuerungsabschluss einen Konferenzstandort der Konferenz betreibt; wobei Operationen für den Konferenzstandort umfassen: Aufzeichnen für den Konferenzstandort und Wiedergeben für den Konferenzstandort;
eine Beantragungseinheit, die konfiguriert ist, gemäß dem empfangenen Befehl zum Modifizieren der Attribute des Konferenzsteuerungsabschlusses Konferenzressourcen zu beantragen; und
eine Modifizierungseinheit, die konfiguriert ist, gegenwärtige Attribute des Konferenzsteuerungsabschlusses gemäß dem empfangen Befehl zum Modifizieren der Attribute des Konferenzsteuerungsabschlusses zu modifizieren.

7. MP nach Anspruch 6, der ferner aufweist:
eine Betriebseinheit, die durch den Konferenzsteuerungsabschluss gesteuert wird, der durch die Hinzufügungseinheit hinzugefügt wird, und die konfiguriert ist, gemäß Informationen, die durch den Konferenzsteuerungsabschluss empfangen werden, über eine Operation für die Konferenz Ressourcen zu beantragen, und die Operation auszuführen.

8. MP nach Anspruch 6, der ferner aufweist:
eine Konferenzraumeinheit, die durch den Konferenzsteuerungsabschluss gesteuert wird, der durch die Hinzufügungseinheit hinzugefügt wird, und die konfiguriert ist, die durch die Beantragungseinheit beantragten Konferenzressourcen zu verwenden, um einen Konferenzraum zu eröffnen.

9. System zum Erzeugen einer Konferenz, das Folgendes aufweist:
einen Mediencontroller, MC, der konfiguriert ist, einen Befehl zum Erzeugen eines Konferenzkontextes, einen Befehl zum Hinzufügen eines Konferenzsteuerungsabschlusses und einen Befehl zum Modifizieren der Attribute des Konferenzsteuerungsabschlusses zu senden; und
einen Medienprozessor, MP, der konfiguriert ist: den Konferenzkontext gemäß dem empfangenen Befehl zum Erzeugen des Konferenzkontextes zu erzeugen, und den Konferenzsteuerungsabschluss zum Konferenzkontext gemäß dem empfangenen Befehl zum Hinzufügen des Konferenzsteuerungsabschlusses hinzuzufügen; wobei der Konferenzsteuerungsabschluss Vorhandensein der Konferenz repräsentiert; wobei die Konferenz eine reservierte Konferenz ist und die Attribute, die die gesamte Konferenz repräsentieren, zur Zeit der Erzeugung der Konferenz an den Konferenzsteuerungsabschluss geliefert werden; wobei der Konferenzsteuerungsabschluss einen Konferenzstandort der Konferenz betreibt; wobei Operationen für den Konferenzstandort umfassen: Aufzeichnen für den Konferenzstandort und Wiedergeben für den Konferenzstandort; und Konferenzressourcen gemäß dem empfangen Befehl zum Modifizieren der Attribute des Konferenzsteuerungsabschlusses zu beantragen, und gegenwärtige Attribute des Konferenzsteuerungsabschlusses zu modifizieren, um eine Konferenz zu erzeugen.

10. System nach Anspruch 9, wobei:
der MC Informationen über eine Operation für die Konferenz sendet; und
der MP Ressourcen gemäß den Informationen beantragt, die durch den Konferenzsteuerungsabschluss empfangen werden, über die Operation für die Konferenz, und die Operation ausführt.

## Revendications

1. Procédé de création d'une conférence, comprenant :
la création, par un processeur multimédia, MP, d'un contexte de conférence en fonction d'une instruction reçue, et l'ajout d'une terminaison de contrôle de conférence sur le contexte de conférence (S11) ; dans lequel la terminaison de contrôle de conférence représente l'existence de la conférence, dans lequel la conférence est une conférence réservée et les attributs qui représentent la totalité de la conférence sont délivrés à la terminaison de contrôle de conférence à l'instant de création de la conférence, dans lequel la terminaison de contrôle de conférence agit sur un site de conférence de la conférence, dans lequel des opérations pour le site de conférence incluent : l'enregistrement pour le site de conférence et la reproduction pour le site de conférence ; et
la sollicitation de ressources de conférence en fonction d'une instruction reçue de modification d'attributs de la terminaison de contrôle de conférence, ainsi que la modification des attributs en cours de la terminaison de contrôle de conférence afin de créer une conférence (S12).

2. Procédé selon la revendication 1, dans lequel, après que la conférence est créée, le procédé comprend en outre :
la sollicitation, par le processeur MP, de ressources en fonction des informations reçues par la terminaison de contrôle de conférence sur une opération pour la conférence, et l'exécution de l'opération.

3. Procédé selon la revendication 2, dans lequel :
si l'opération pour la conférence est une opération de reproduction ou une opération d'enregistrement, les informations reçues par la terminaison de contrôle de conférence sur l'opération pour la conférence comprennent des informations de durée ; le processeur MP démarrant un temporisateur en fonction des informations de durée et arrêtant l'opération par l'intermédiaire de la terminaison de contrôle de conférence lors de l'expiration du temporisateur.

4. Procédé selon la revendication 2, dans lequel :
si l'opération pour la conférence est une opération de reproduction ou une opération d'enregistrement, le processeur MP établit à l'avance un événement de détection de chiffre multifréquence à double tonalité, DTMF, dans le but de résoudre l'instruction
envoyée par le côté de la terminaison, et il démarre et achève l'opération en conséquence.

5. Procédé selon la revendication 1, dans lequel :
le processeur MP utilise les ressources de conférence pour ouvrir une salle de conférence par l'intermédiaire de la terminaison de contrôle de conférence.

6. Processeur multimédia, MP, comprenant :
une unité de réception, configurée pour recevoir une instruction de création d'une conférence et une instruction de modification d'attributs d'une terminaison de contrôle de conférence ;
une unité de création, configurée pour créer un contexte de conférence en fonction de l'instruction de création de la conférence ;
une unité d'ajout, configurée pour ajouter la terminaison de contrôle de conférence sur le contexte de conférence en fonction de l'instruction de création de la conférence ; dans lequel la terminaison de contrôle de conférence représente l'existence de la conférence ; dans lequel la conférence est une conférence réservée et
les attributs qui représentent la totalité de la conférence sont délivrés à la terminaison de contrôle de conférence à l'instant de création de la conférence ; dans lequel la terminaison de contrôle de conférence agit sur un site de conférence de la conférence ; dans lequel les opérations pour le site de conférence incluent : l'enregistrement pour le site de conférence et la reproduction pour le site de conférence,
une unité d'application, configurée pour appliquer les ressources de conférence en fonction de l'instruction reçue de modification des attributs de la terminaison de contrôle de conférence ; et
une unité de modification, configurée pour modifier les attributs en cours de la terminaison de contrôle de conférence en fonction de l'instruction reçue de modification des attributs de la terminaison de contrôle de conférence.

7. Processeur MP selon la revendication 6, comprenant en outre :
une unité de mise en oeuvre qui est commandée par la terminaison de contrôle de conférence ajoutée par l'unité d'ajout et qui est configurée pour : solliciter des ressources en fonction d'informations reçues par la terminaison de contrôle de conférence sur une opération pour la conférence et exécuter l'opération.

8. Processeur MP selon la revendication 6, comprenant en outre :
une unité de salle de conférence qui est contrôlée par la terminaison de contrôle de conférence ajoutée par l'unité d'ajout et qui est configurée pour utiliser les ressources de conférence sollicitées par l'unité d'application dans le but d'ouvrir une salle de conférence.

9. Système de création d'une conférence, comprenant :
un contrôleur multimédia, MC, configuré pour envoyer une instruction de création d'un contexte de conférence, une instruction d'ajout d'une terminaison de contrôle de conférence et une instruction de modification d'attributs de la terminaison de contrôle de conférence ; et
un processeur multimédia, MP, configuré pour : créer le contexte de conférence en fonction de l'instruction reçue de création du contexte de conférence et ajouter la terminaison de contrôle de conférence au contexte de conférence en fonction de l'instruction reçue d'ajout de la terminaison de contrôle de conférence ; dans lequel la terminaison de contrôle de conférence représente l'existence de la conférence ; dans lequel la conférence est une conférence réservée et les attributs qui représentent la totalité de la conférence sont délivrés sur la terminaison de contrôle de conférence à l'instant de création de la conférence ; dans lequel la terminaison de contrôle de conférence agit sur un site de conférence de la conférence ; dans lequel les opérations pour le site de conférence incluent : l'enregistrement pour le site de conférence et la reproduction pour le site de conférence, et solliciter des ressources de conférence en fonction de l'instruction reçue de modification des attributs de la terminaison de contrôle de conférence et modifier les attributs en cours de la terminaison de contrôle de conférence dans le but de créer une conférence.

10. Système selon la revendication 9, dans lequel :
le contrôleur MC envoie des informations sur une opération pour la conférence ; et
le processeur MP sollicite des ressources en fonction des informations reçues par la terminaison de contrôle de conférence sur l'opération pour la conférence, et exécute l'opération.
